# EUROPEAN PATENT APPLICATION

(11) **EP 1 185 104 A1**
(43) Date of publication of application: **06.03.2002**
(21) Application number: 01119431.3
(22) Date of filing: 22.08.2001
(51) Int. Cl.: H04N 7/24, H04N 7/26, H04L 12/56, H04Q 7/18

(54) **Mobile terminal battery power conservation**

(30) Priority: 23.08.2000 GB 0020730
(71) Applicant: MOTOROLA, INC., Schaumburg, IL 60196 (US)
(72) Inventor: Hobson, Paola Marcella, Alton GU34 2SQ, Hampshire (GB); McKoen, Kevin Michael, San Diego, California 92126 (US); Kadir, Timor, Oxford OX2 6UD (GB)
(74) Representative: Treleven, Colin

(57) **Abstract**

An image acquisition, transmission, and display system including a mobile terminal operative to acquire and transmit images a receiving terminal operative to receive and display the images and detection apparatus operative to detect whether or not a viewer is viewing the images, where the detection apparatus is operative, upon detecting that no viewer is viewing the images, to cause a first signal to be sent to the mobile terminal causing the mobile terminal to reduce its image acquisition rate, and where the detection apparatus is operative, upon detecting that a viewer is viewing the images, to cause a second signal to be sent to the mobile terminal causing the mobile terminal to increase its image acquisition rate.

## Description

### FIELD OF THE INVENTION

The present invention relates to mobile telecommunications in general, and more particularly to mobile terminal battery power conservation.

### BACKGROUND OF THE INVENTION

In mobile telecommunications systems, such as cellular telephone systems, conservation of mobile terminal battery power is desirable in order to allow the mobile terminal to maintain communications for as long as possible. While a mobile terminal may conserve battery power simply by ceasing to transmit for a period of time, doing so would be disruptive where the mobile terminal transmits images that are encoded using a predictive coding scheme. Where predictive coding is used, the next image to be displayed is predicted from the currently displayed image. If there is a relatively long interval between image transmissions, the image used for prediction at the decoder would be significantly different from that used at the encoder, and therefore the information used to update the current image might be stale and possibly unusable.

### SUMMARY OF THE INVENTION

The present invention seeks to provide improved methods and apparatus of mobile terminal battery power conservation.

There is thus provided in accordance with a preferred embodiment of the present invention an image acquisition, transmission, and display system including a mobile terminal operative to acquire and transmit images a receiving terminal operative to receive and display the images and detection apparatus operative to detect whether or not a viewer is viewing the images, where the detection apparatus is operative, upon detecting that no viewer is viewing the images, to cause a first signal to be sent to the mobile terminal causing the mobile terminal to reduce its image acquisition rate, and where the detection apparatus is operative, upon detecting that a viewer is viewing the images, to cause a second signal to be sent to the mobile terminal causing the mobile terminal to increase its image acquisition rate.

Further in accordance with a preferred embodiment of the present invention the mobile terminal is operative to increase its acquisition rate to a normal acquisition rate upon receiving the second signal.

Still further in accordance with a preferred embodiment of the present invention the mobile terminal includes a battery for powering the terminal and where the mobile terminal is operative to decrease its power consumption by reducing its image acquisition rate.

Additionally in accordance with a preferred embodiment of the present invention the mobile terminal is operative to communicate with the receiving terminal wirelessly.

Moreover in accordance with a preferred embodiment of the present invention of the present invention the mobile terminal includes encoding apparatus operative to encode the images prior to transmission by the mobile terminal using a predictive encoding technique.

There is also provided in accordance with a preferred embodiment of the present invention an image acquisition and transmission system including a mobile terminal operative to acquire and transmit images a battery for powering the mobile terminal power level detection apparatus operative to determine when the power level of the battery drops below a predetermined level and encoding apparatus operative to encode the images prior to transmission by the mobile terminal using a scalable compression method into at least one low-resolution component and at least one high-resolution component, where the power level detection apparatus is operative, upon determining that the power level of the battery has dropped below a predetermined level, to cause the mobile terminal to transmit the low-resolution component and withhold transmission of the high-resolution component.

Further in accordance with a preferred embodiment of the present invention the power level detection apparatus is operative, upon determining that the power level of the battery has dropped below a predetermined level, to cause the encoding apparatus to encode the image into the low-resolution component and prevent encoding the image into the high-resolution component.

Still further in accordance with a preferred embodiment of the present invention the system further includes a receiving terminal operative to receive and decode any of the components and display an image constructed therefrom.

There is additionally provided in accordance with a preferred embodiment of the present invention an image acquisition and transmission system including a mobile terminal operative to acquire and transmit images a battery for powering the mobile terminal power level detection apparatus operative to determine when the power level of the battery drops below a predetermined level and encoding apparatus operative to encode the images prior to transmission by the mobile terminal using JPEG2000 compression into one tile per image, where the power level detection apparatus is operative, upon determining that the power level of the battery has dropped below a predetermined level, to cause the mobile terminal to determine the size of a reduced bit stream by applying a predetermined reduction in transmission time to an estimate of the total bit stream size needed to transmit the original resolution representation of the next image to be transmitted, and to cause the encoding apparatus to curtail encoding at a sufficiently low sub-band to achieve the reduced bit stream.

There is also provided in accordance with a preferred embodiment of the present invention an image acquisition and transmission system including a mobile terminal operative to acquire and transmit images a battery for powering the mobile terminal power level detection apparatus operative to determine when the power level of the battery drops below a predetermined level and encoding apparatus operative to encode each of the images prior to transmission by the mobile terminal using JPEG2000 compression into a plurality of tiles per image, each tile having at least one low-resolution component and at least one high-resolution component, and operative to order a bit stream of the encoded image such that all of the low-resolution components are transmitted before the high-resolution components, where the power level detection apparatus is operative, upon determining that the power level of the battery has dropped below a predetermined level, to cause the mobile terminal to transmit the low-resolution components and withhold transmission of the high-resolution components.

There is additionally provided in accordance with a preferred embodiment of the present invention an image acquisition and transmission system including a mobile terminal operative to acquire and transmit images a battery for powering the mobile terminal power level detection apparatus operative to determine when the power level of the battery drops below a predetermined level and encoding apparatus operative to encode each of the images prior to transmission by the mobile terminal using block-based compression, where the power level detection apparatus is operative, upon determining that the power level of the battery has dropped below a predetermined level, to cause the encoding apparatus to increase the number of skipped macro blocks per frame is increased until a predetermined reduced packet size is achieved.

There is also provided in accordance with a preferred embodiment of the present invention in an image acquisition, transmission, and display system including a battery-powered mobile terminal operative to acquire images, a battery power conservation method including acquiring a first plurality of images at a first acquisition rate, thereby consuming power at a first power consumption level displaying any of the images detecting whether or not a viewer is viewing the displayed image and upon detecting that no viewer is viewing the displayed image, acquiring a second plurality of images at a second acquisition rate that is less than the first acquisition rate, thereby consuming power at a second power consumption level that is lower than the first power consumption level.

Further in accordance with a preferred embodiment of the present invention the system further includes, upon detecting that a viewer is viewing the displayed image subsequent to the acquiring a second plurality step, acquiring a third plurality of images at the first acquisition rate.

Still further in accordance with a preferred embodiment of the present invention the acquiring step includes acquiring the images at the mobile terminal and further including transmitting the images from the mobile terminal to a receiving terminal, where the displaying step includes displaying at the receiving terminal and upon detecting that no viewer is viewing the displayed image, sending a first signal to the mobile terminal causing the mobile terminal to reduce its image acquisition rate to the second acquisition rate.

Additionally in accordance with a preferred embodiment of the present invention the method further includes, upon detecting that a viewer is viewing the images, sending a second signal to the mobile terminal causing the mobile terminal to increase its image acquisition rate to the first acquisition rate.

Moreover in accordance with a preferred embodiment of the present invention the method further includes encoding the images prior to transmission by the mobile terminal using a predictive encoding technique.

There is additionally provided in accordance with a preferred embodiment of the present invention in an image acquisition and transmission system including a receiving terminal and a mobile terminal operative to acquire and transmit images, a battery for powering the mobile terminal, and power level detection apparatus for determining the power level of the battery, a battery power conservation method including determining the power level of the battery upon determining that the power level of the battery is above a predetermined level encoding the images at the mobile terminal using a scalable compression method into at least one low-resolution component and at least one high-resolution component and transmitting the low-resolution component and the high-resolution component to the receiving terminal and upon determining that the power level of the battery is below the predetermined level encoding the images at the mobile terminal using a scalable compression method into at least one low-resolution component and transmitting the low-resolution component to the receiving terminal.

Further in accordance with a preferred embodiment of the present invention of the present invention the method further includes decoding any of the components at the receiving terminal and displaying an image constructed therefrom.

There is additionally provided in accordance with a preferred embodiment of the present invention in an image acquisition and transmission system including a receiving terminal and a mobile terminal operative to acquire and transmit images, a battery for powering the mobile terminal, and power level detection apparatus for determining the power level of the battery, a battery power conservation method including determining the power level of the battery and upon determining that the power level of the battery is below a predetermined level determining the size of a reduced bit stream by applying a predetermined reduction in transmission time to an estimate of the total bit stream size needed to transmit an original resolution representation of a next image to be transmitted encoding the image starting with a low sub-band and curtailing encoding of the image at a sufficiently low sub-band to achieve the reduced bit stream.

Further in accordance with a preferred embodiment of the present invention of the present invention the encoding step includes encoding using JPEG2000 compression at one tile per image.

There is additionally provided in accordance with a preferred embodiment of the present invention in an image acquisition and transmission system including a receiving terminal and a mobile terminal operative to acquire and transmit images, a battery for powering the mobile terminal, and power level detection apparatus for determining the power level of the battery, a battery power conservation method including encoding each of the images prior to transmission by the mobile terminal using JPEG2000 compression into a plurality of tiles per image, each tile having at least one low-resolution component and at least one high-resolution component ordering a bit stream of the encoded image such that all of the low-resolution components are transmitted before the high-resolution components determining the power level of the battery and upon determining that the power level of the battery has dropped below a predetermined level, transmitting the low-resolution components and withhold transmission of the high-resolution components.

There is additionally provided in accordance with a preferred embodiment of the present invention in an image acquisition and transmission system including a receiving terminal and a mobile terminal operative to acquire and transmit images, a battery for powering the mobile terminal, and power level detection apparatus for determining the power level of the battery, a battery power conservation method including determining the power level of the battery and upon determining that the power level of the battery has dropped below a predetermined level, encoding each of the images prior to transmission by the mobile terminal using block-based compression, where the encoding step includes skipping a sufficient number of macro blocks per frame until a predetermined reduced packet size is achieved.

The disclosures of all patents, patent applications, and other publications mentioned in this specification and of the patents, patent applications, and other publications cited therein are hereby incorporated by reference.

### BRIEF DESCRIPTION OF THE DRAWINGS

The present invention will be understood and appreciated more fully from the following detailed description taken in conjunction with the appended drawings in which:
Fig. 1 is a simplified conceptual illustration of a system for conservation of mobile terminal battery power, the system being constructed and operative in accordance with a preferred embodiment of the present invention;
Fig. 2 is a simplified flowchart illustration of a method of operation of the system of Fig. 1, the method being operative in accordance with a preferred embodiment of the present invention;
Fig. 3 is a simplified block diagram of an exemplary implementation of the system of Fig. 1, constructed and operative in accordance with a preferred embodiment of the present invention;
Fig. 4 is a simplified block diagram of a system for conservation of mobile terminal battery power, constructed and operative in accordance with a preferred embodiment of the present invention;
Fig. 5 is a simplified flowchart illustration of a method of operation of the system of Fig. 4, the method being operative in accordance with a preferred embodiment of the present invention;
Fig. 6 is a simplified pictographical illustration of image sub-band composition in the frequency domain useful in understanding the method of Fig. 5;
Fig. 7 is a simplified flowchart illustration of a method of operation of the system of Fig. 4 for use with the JPEG2000 compression system, the method being operative in accordance with a preferred embodiment of the present invention;
Fig. 8 is a simplified flowchart illustration of a method of operation of the system of Fig. 4 for use with the JPEG2000 compression system, the method being operative in accordance with a preferred embodiment of the present invention; and
Fig. 9 is a simplified flowchart illustration of a method of operation of the system of Fig. 4 for use with block-based compression methods, the method being operative in accordance with a preferred embodiment of the present invention.

### DETAILED DESCRIPTION OF PREFERRED EMBODIMENTS

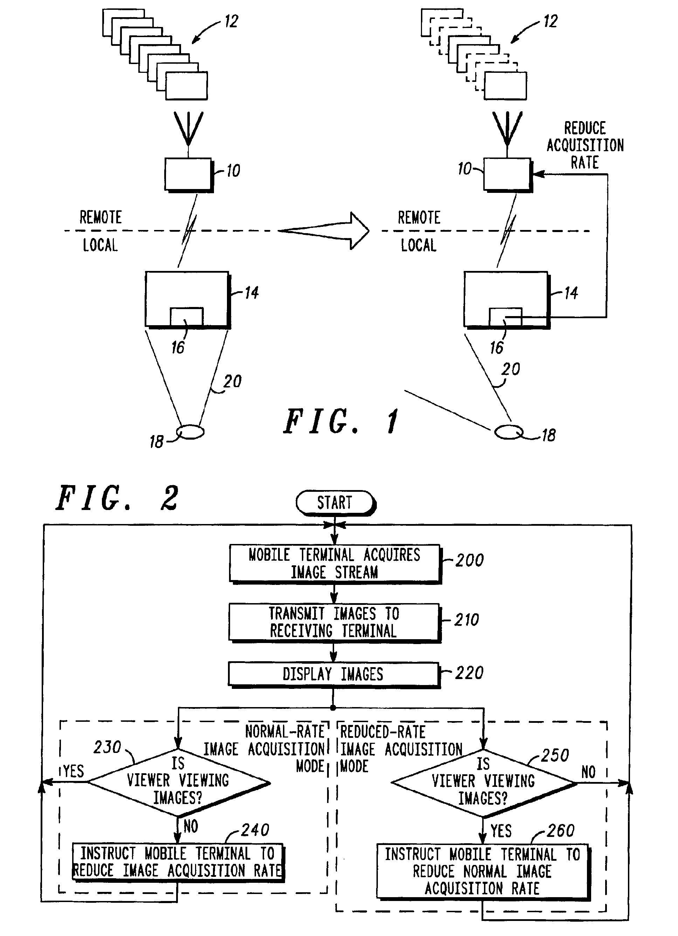

Reference is now made to Fig. 1 which is a simplified conceptual illustration of a system for conservation of mobile terminal battery power, constructed and operative in accordance with a preferred embodiment of the present invention, and to Fig. 2 which is a simplified flowchart illustration of a method of operation of the system of Fig. 1, the method being operative in accordance with a preferred embodiment of the present invention. In the system of Fig. 1 a battery-operated mobile terminal 10 acquires images in an image stream 12 using any conventional means (step 200) and transmits the images to a receiving terminal 14 (step 210) which displays the images (step 220). Eye/gaze detection apparatus 16 is also provided for detecting whether or not a viewer 18 is viewing the images on terminal 14, with viewer 18's field of view represented by reference numeral 20. Detection apparatus 16 may employ infrared sensor technology, iris tracking technology, or any other technology known in the art for tracking viewer 18's view of the image displayed at terminal 14.

The system of Fig. 1 preferably operates in either of two modes: normal-rate image acquisition mode and reduced-rate image acquisition mode. In normal-rate image acquisition mode, when detection apparatus 16 detects that viewer 18 is not viewing the image displayed at terminal 14 (step 230), detection apparatus 16 preferably causes a signal to be sent to mobile terminal 10, such as via terminal 14, instructing mobile terminal 10 to enter reduced-rate acquisition mode by reducing its image acquisition rate, such as to one-tenth or one-twentieth of its normal image acquisition rate (step 240). Mobile terminal 10 thus acquires, encodes, and transmits fewer images of unchanged size and resolution and unchanged spatial quality per unit time, thereby decreasing its power consumption and conserving battery power. At terminal 14 received images are decoded and are either stored, displayed, or both. In reduced-rate image acquisition mode, when detection apparatus 16 detects that viewer 18 is again viewing the image displayed at terminal 14 (step 250), detection apparatus 16 preferably causes a signal to be sent to mobile terminal 10 instructing mobile terminal 10 to enter normal-rate acquisition mode by resuming its normal image acquisition rate (step 260).

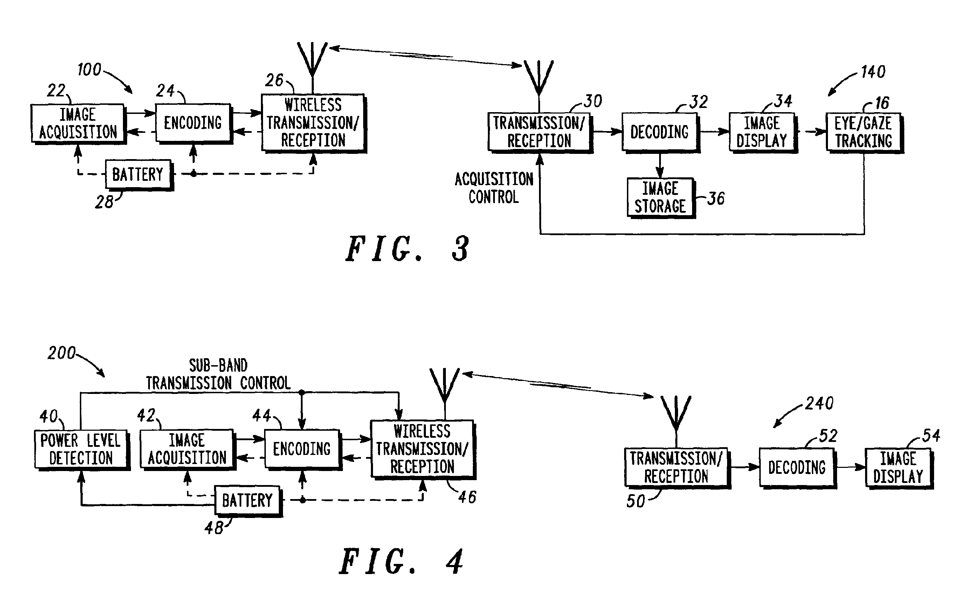

Reference is now made to Fig. 3 which is a simplified block diagram of an exemplary implementation of the system of Fig. 1, constructed and operative in accordance with a preferred embodiment of the present invention. Elements of mobile terminal 10 of Fig. 1, generally designated 100, preferably include image acquisition apparatus 22 where images are acquired and fed to encoding apparatus 24 which encodes the images using any conventional technique, preferably a predictive encoding technique such as H.263 or MPEG-4. The encoded images are then transmitted via wireless transmission/reception apparatus 26 in accordance with any conventional transmission technique such as TETRA or GPRS. Battery power for mobile terminal 10 is provided by a battery 28.

Elements of receiving terminal 14 of Fig. 1, generally designated 140, preferably include transmission/reception apparatus 30 for receiving encoded images from transmission/reception apparatus 26, preferably wirelessly. The received encoded images are then fed to decoding apparatus 32 which decodes the images. The images are then displayed on image display apparatus 34. Eye/gaze detection apparatus 16 then detects whether or not image display apparatus 34 is being viewed by a viewer, and provides an appropriate acquisition control command to mobile terminal 10 as described hereinabove. Images, prior to or subsequent to decoding, may additionally or alternatively to being displayed on image display apparatus 34, be stored in image storage apparatus 36 for later playback.

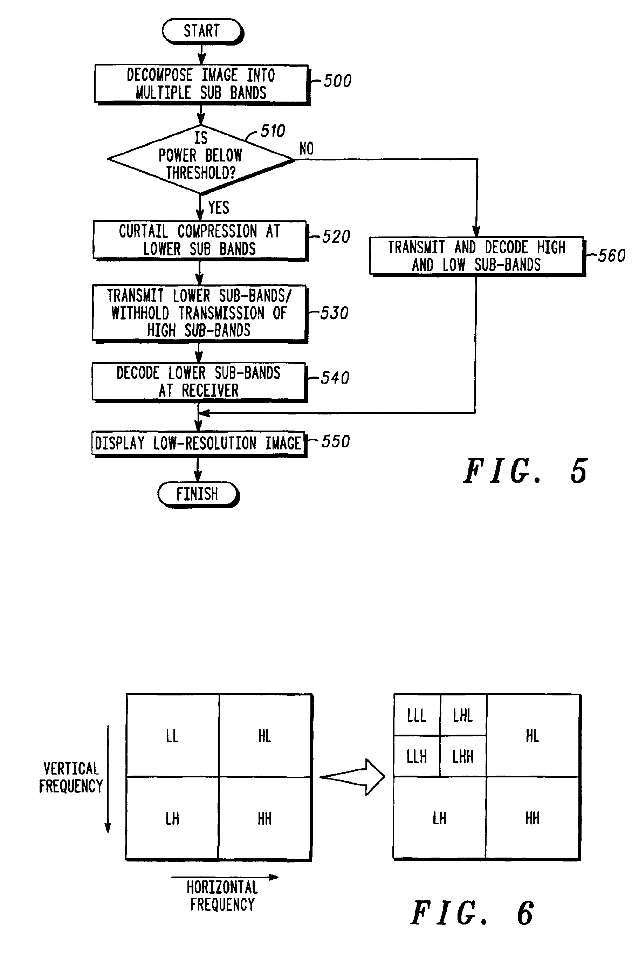

Reference is now made to Fig. 4 which is a simplified block diagram of a system for conservation of mobile terminal battery power, constructed and operative in accordance with a preferred embodiment of the present invention. Elements of a mobile terminal, generally designated 200, preferably include image acquisition apparatus 42 where images are acquired and fed to encoding apparatus 44 which encodes the images using any conventional scalable compression method, such as sub-band or wavelet compression as described in the JPEG2000 standard. The encoded images are then transmitted via wireless transmission/reception apparatus 46 in accordance with any conventional transmission technique such as TETRA or GPRS. Battery power for mobile terminal 200 is provided by a battery 48, and power level detection apparatus 40 is provided for detecting, using conventional techniques, when the power level of battery 48 drops below a predetermined level.

Elements of a receiving terminal, generally designated 240, preferably include transmission/reception apparatus 50 for receiving encoded images from transmission/reception apparatus 46, preferably wirelessly. The received encoded images are then fed to decoding apparatus 52 which decodes the images. The images are then displayed on image display apparatus 54.

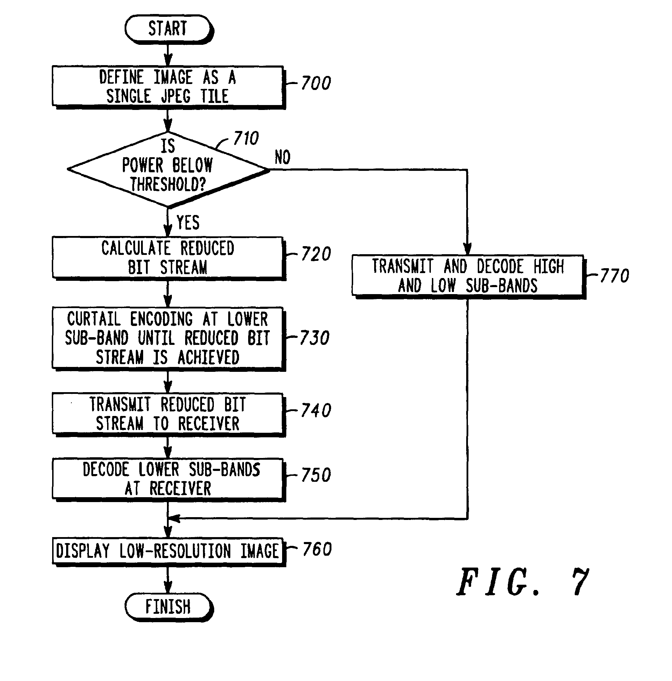

Reference is now made to Fig. 5 which is a simplified flowchart illustration of a method of operation of the system of Fig. 4, the method being operative in accordance with a preferred embodiment of the present invention, and additionally to Fig. 6 which is a simplified pictographical illustration of image sub-band composition in the frequency domain useful in understanding the method of Fig. 5. As is well known in multi-resolution or scalable image compression system, the properties of wavelet transforms are such that families of wavelets can be defined. Thus, an image may be decomposed into a series of sub-bands according to vertical and horizontal frequencies, shown in Fig. 6 as "LL," "LH," "HL," and "HH," with "L" denoting a low frequency and "H" denoting a high frequency. In practice, the LL band may be further decomposed, shown in Fig. 6 as "LLL," "LLH," "LHL," and "LHH." Each of the sub-bands are typically encoded using known techniques and transmitted in a bit stream starting with the LL band, being the band with the lowest resolution. Typically, once all data relating to the LL band is encoded and transmitted, the higher resolution information is encoded and transmitted, ending with that contained in the HH band.

In the method of Fig. 5 an image is decomposed into multiple sub-bands, with the LL sub-band being optionally decomposed further (step 500). When the mobile terminal's battery power level falls below a predetermined threshold as measured by power level detection apparatus 40 (step 510), such as below a minimum number of minutes of useful transmission time remaining at full power, the encoder is instructed to curtail the compression of the image bit stream at one or more of the lowest sub-bands (step 520), and/or the transmitter is instructed to turn off rather than transmit the higher sub-bands (step 530), thereby decreasing its power consumption and conserving battery power. The receiving terminal then decodes the low sub-bands without reference to the higher frequency components (step 540), and a low-resolution image is displayed (step 550). The mobile terminal may optionally transmit a signal to the receiving terminal that it is going into power saving mode, whereupon a message may be displayed at the receiving terminal warning the viewer that the displayed image resolution will be diminished. Where the mobile terminal's power level is above the threshold, both low and high sub-bands are transmitted to the receiving terminal (step 560) and decoded normally.

Reference is now made to Fig. 7 which is a simplified flowchart illustration of a method of operation of the system of Fig. 4 for use with the JPEG2000 compression system, the method being operative in accordance with a preferred embodiment of the present invention. In the JPEG2000 compression system an image may be decomposed into a series of "tiles" whose sizes may be user-defined. As such, an image in the method of Fig. 7 may be defined as a single tile (step 700). When the mobile terminal's battery power level falls below a predetermined threshold as measured by power level detection apparatus 40 (step 710), a computation is made to determine the size of a reduced bit stream by applying a predetermined reduction in transmission time (e.g., half the average transmission time per image) to an estimate of the total bit stream size needed to transmit the original resolution representation of the image (step 720). This estimate may be from a previously encoded image at the same transmitter. For example, if transmission times are to be halved, and the estimated number of bits needed to transmit the entire current image is one million bits, then only one half million bits are to be transmitted in the reduced bit stream. Thus, encoding is curtailed at the appropriate lower sub-band in order to achieve the reduced number of bits, with sub-band encoding typically being performed only until the desired file size is reached (step 730). The reduced bit stream is then transmitted to the receiving terminal (step 740). The receiving terminal then decodes the low sub-bands without reference to the higher frequency components (step 750), and a low-resolution image is displayed (step 760). Where the mobile terminal's power level is above the threshold, both low and high sub-bands are transmitted to the receiving terminal (step 770) and decoded normally.

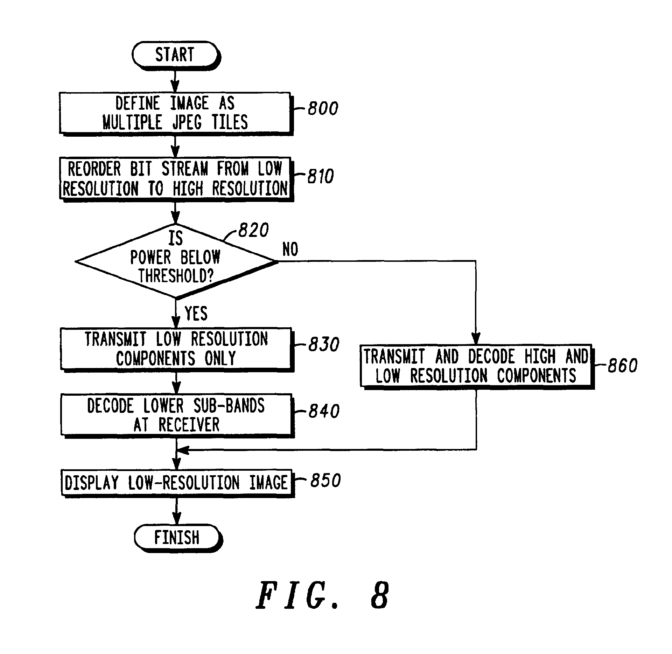

Reference is now made to Fig. 8 which is a simplified flowchart illustration of a method of operation of the system of Fig. 4 for use with the JPEG2000 compression system, the method being operative in accordance with a preferred embodiment of the present invention. In the method of Fig. 8 an image is decomposed into a plurality of tiles (step 800). The bit stream then is reordered to allow the lowest resolution components of all the tiles to be transmitted first, followed by the higher resolution components for all tiles (step 810). When the mobile terminal's battery power level falls below a predetermined threshold as measured by power level detection apparatus 40 (step 820), only the lowest resolution components are transmitted, and a JPEG2000 "End of Image" marker is transmitted to the receiving terminal to indicate that no more components will be sent (step 830). The receiving terminal then decodes the low sub-bands without reference to the higher frequency components (step 840), and a low-resolution image is displayed (step 850). Where the mobile terminal's power level is above the threshold, both low and high sub-bands are transmitted to the receiving terminal (step 860) and decoded normally. A new image may be subsequently transmitted using the JPEG2000 "Start of Codestream" marker. Alternatively, if the previous transmission did not include the End of Image marker, it could be assumed that additional data relating to the previous image are being transmitted.

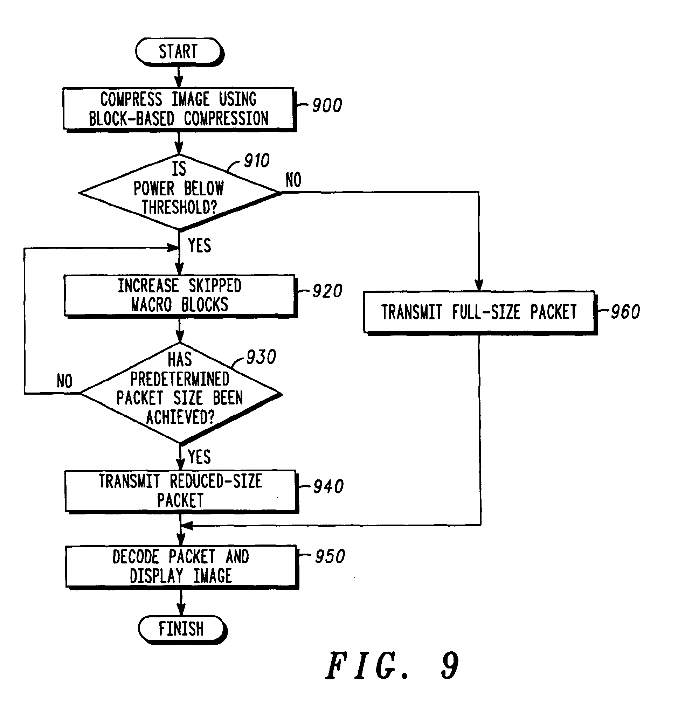

Reference is now made to Fig. 9 which is a simplified flowchart illustration of a method of operation of the system of Fig. 4 for use with block-based compression methods, the method being operative in accordance with a preferred embodiment of the present invention. The method of Fig. 9 may be used in a packet-based transmission system, where one packet may contain the data pertaining to one or more encoded Groups of Blocks or video frames. The packet size is reduced such that the length of time that the transmitter is on is reduced, thus saving battery power. In the method of Fig. 9 an image is compressed before transmission using a block-based compression method such as H.263 (step 900). Typically the image is compressed at a rate that corresponds to the transmission channel capacity available. When the mobile terminal's battery power level falls below a predetermined threshold as measured by power level detection apparatus 40 (step 910), the number of skipped macro blocks (MB) per frame is increased (step 920) until a predetermined reduced packet size is achieved (step 930). The number of MBs to be dropped per frame may be determined using any of several techniques described hereinbelow, either alone or in combination. The reduced packet is then transmitted to the receiving terminal (step 940) and decoded (step 950). Where the mobile terminal's power level is above the threshold, the data packets are transmitted to the receiving terminal (step 960) and decoded normally.

In one technique, the desired reduced packet size is determined by expressing the desired number of bits to be used to encode the current frame as a function of the number of bits (NBits) used to encode the previous frame, such as half as many bits, where there is one frame per transmission packet. This could similarly be applied to one or more Groups of Blocks or video frames.

In another technique, the number of MBs to be dropped from the current frame may be based on the number of MBs skipped in the previous frame. First, the average size (in bits) of an encoded MB from the previous frame, AS, may be calculated, typically as a running average accumulator during the previous frame. Then the number of MBs to drop, ND, may be estimated using the formula ND = 0.5*(NBits)/AS. If ND is greater than about ¾ of the number of MBs available in the frame, then it would be preferable to drop the entire frame. If, however, ND is less than about ¾ of the total MBs in the frame, then another method may be used to choose which MBs to drop.

In another technique, user feedback means, such as a mouse or other pointing device, is provided whereby the user may indicate one or more picture areas that are not to suffer degradations when battery power is low. MBs in these image areas will not be skipped.

In another technique, automated methods for indicating regions of interest in an image, such as object segmentation and tracking, may be used to indicate areas in which MBs are not to be skipped.

Where regions of interest are not indicated by a user or otherwise, or outside of such regions, the encoder may choose MBs to skip based on their motion vector size and/or residual error. The first candidates to be skipped will preferably be those MBs whose motion vector is zero, and whose residual error falls below a predetermined threshold T1 based on the sum of absolute difference between the source and the reconstructed MB. It is appreciated that T1 may be varied in order to obtain the desired number of skipped MBs.

After applying any of the above techniques, if the total number of MBs skipped is still below the desired number, ND, then MBs whose motion vector is below a certain threshold T2 may be skipped. If ND is still not achieved, T1 and T2 may be increased until the desired result is obtained.

Once the desired number of skipped MBs is achieved, encoding may proceed without skipping any additional MBs in the current frame.

It is appreciated that one or more of the steps of any of the methods described herein may be omitted or carried out in a different order than that shown, without departing from the true spirit and scope of the invention.

While the present invention as disclosed herein may or may not have been described with reference to specific hardware or software, the present invention has been described in a manner sufficient to enable persons of ordinary skill in the art to readily adapt commercially available hardware and software as may be needed to reduce any of the embodiments of the present invention to practice without undue experimentation and using conventional techniques.

While the present invention has been described with reference to one or more specific embodiments, the description is intended to be illustrative of the invention as a whole and is not to be construed as limiting the invention to the embodiments shown. It is appreciated that various modifications may occur to those skilled in the art that, while not specifically shown herein, are nevertheless within the true scope of the invention.

## Claims

1. An image acquisition, transmission, and display system comprising:
a mobile terminal operative to acquire and transmit images;
a receiving terminal operative to receive and display said images; and
detection apparatus operative to detect whether or not a viewer is viewing said images,
wherein said detection apparatus is operative, upon detecting that no viewer is viewing said images, to cause a first signal to be sent to said mobile terminal causing said mobile terminal to reduce its image acquisition rate, and wherein said detection apparatus is operative, upon detecting that a viewer is viewing said images, to cause a second signal to be sent to said mobile terminal causing said mobile terminal to increase its image acquisition rate.

2. A system according to claim 1 wherein said mobile terminal is operative to increase its acquisition rate to a normal acquisition rate upon receiving said second signal.

3. A system according to claim 1 wherein said mobile terminal comprises a battery for powering said terminal and wherein said mobile terminal is operative to decrease its power consumption by reducing its image acquisition rate.

4. An image acquisition and transmission system comprising:
a mobile terminal operative to acquire and transmit images;
a battery for powering said mobile terminal;
power level detection apparatus operative to determine when the power level of said battery drops below a predetermined level; and
encoding apparatus operative to encode said images prior to transmission by said mobile terminal using a scalable compression method into at least one low-resolution component and at least one high-resolution component,
wherein said power level detection apparatus is operative, upon determining that the power level of said battery has dropped below a predetermined level, to cause said mobile terminal to transmit said low-resolution component and withhold transmission of said high-resolution component.

5. A system according to claim 4 wherein said power level detection apparatus is operative, upon determining that the power level of said battery has dropped below a predetermined level, to cause said encoding apparatus to encode said image into said low-resolution component and prevent encoding said image into said high-resolution component.

6. An image acquisition and transmission system comprising:
a mobile terminal operative to acquire and transmit images;
a battery for powering said mobile terminal;
power level detection apparatus operative to determine when the power level of said battery drops below a predetermined level; and
encoding apparatus operative to encode said images prior to transmission by said mobile terminal using JPEG2000 compression into one tile per image,
wherein said power level detection apparatus is operative, upon determining that the power level of said battery has dropped below a predetermined level, to cause said mobile terminal to determine the size of a reduced bit stream by applying a predetermined reduction in transmission time to an estimate of the total bit stream size needed to transmit the original resolution representation of the next image to be transmitted, and to cause said encoding apparatus to curtail encoding at a sufficiently low sub-band to achieve the reduced bit stream.

7. An image acquisition and transmission system comprising:
a mobile terminal operative to acquire and transmit images;
a battery for powering said mobile terminal;
power level detection apparatus operative to determine when the power level of said battery drops below a predetermined level; and
encoding apparatus operative to encode each of said images prior to transmission by said mobile terminal using JPEG2000 compression into a plurality of tiles per image, each tile having at least one low-resolution component and at least one high-resolution component, and operative to order a bit stream of said encoded image such that all of said low-resolution components are transmitted before said high-resolution components,
wherein said power level detection apparatus is operative, upon determining that the power level of said battery has dropped below a predetermined level, to cause said mobile terminal to transmit said low-resolution components and withhold transmission of said high-resolution components.

8. An image acquisition and transmission system comprising:
a mobile terminal operative to acquire and transmit images;
a battery for powering said mobile terminal;
power level detection apparatus operative to determine when the power level of said battery drops below a predetermined level; and
encoding apparatus operative to encode each of said images prior to transmission by said mobile terminal using block-based compression,
wherein said power level detection apparatus is operative, upon determining that the power level of said battery has dropped below a predetermined level, to cause said encoding apparatus to increase the number of skipped macro blocks per frame until a predetermined reduced packet size is achieved.

9. In an image acquisition, transmission, and display system including a battery-powered mobile terminal operative to acquire images, a battery power conservation method comprising:
acquiring a first plurality of images at a first acquisition rate, thereby consuming power at a first power consumption level;
displaying any of said images;
detecting whether or not a viewer is viewing said displayed image; and
upon detecting that no viewer is viewing said displayed image, acquiring a second plurality of images at a second acquisition rate that is less than said first acquisition rate, thereby consuming power at a second power consumption level that is lower than said first power consumption level.

10. In an image acquisition and transmission system including a receiving terminal and a mobile terminal operative to acquire and transmit images, a battery for powering said mobile terminal, and power level detection apparatus for determining the power level of said battery, a battery power conservation method comprising:
determining the power level of said battery;
upon determining that the power level of said battery is above a predetermined level:
encoding said images at said mobile terminal using a scalable compression method into at least one low-resolution component and at least one high-resolution component; and
transmitting said low-resolution component and said high-resolution component to said receiving terminal; and
upon determining that the power level of said battery is below said predetermined level:
encoding said images at said mobile terminal using a scalable compression method into at least one low-resolution component; and
transmitting said low-resolution component to said receiving terminal.

11. In an image acquisition and transmission system including a receiving terminal and a mobile terminal operative to acquire and transmit images, a battery for powering said mobile terminal, and power level detection apparatus for determining the power level of said battery, a battery power conservation method comprising:
determining the power level of said battery; and
upon determining that the power level of said battery has dropped below a predetermined level, encoding each of said images prior to transmission by said mobile terminal using block-based compression, wherein said encoding step comprises skipping a sufficient number of macro blocks per frame until a predetermined reduced packet size is achieved.
